# EUROPEAN PATENT APPLICATION

(11) **EP 3 188 158 A1**
(43) Date of publication of application: **05.07.2017**
(21) Application number: 16739008.7
(22) Date of filing: 20.05.2016
(51) Int. Cl.: G08G 1/16

(54) **PARKING ASSIST SYSTEM AND PARKING METHOD**

(30) Priority: 29.10.2015 CN 201510717196
(71) Applicant: LE Holdings (Beijing) Co., Ltd., Beijing 100025 (CN); Leauto Intelligent Technology (BEIJING) Co. Ltd, Beijing 100020 (CN)
(72) Inventor: ZOU, Yu, Beijing 100020 (CN); XU, Yong, Beijing 100020 (CN); LI, Wenrui, Beijing 100020 (CN); CHEN, Kunsheng, Beijing 100020 (CN); LI, Dan, Beijing 100020 (CN); LIN, Wei, Beijing 100020 (CN); LIU, Peng, Beijing 100020 (CN)
(74) Representative: Gosnall, Toby
(86) International application number: PCT/CN2016/082802
(87) International publication number: WO 2017/071187

(57) **Abstract**

A parking auxiliary system and a parking method are disclosed by the disclosure. The system includes: a communication module, an image acquisition module and an image processing module. The communication module is configured to receive a short message set sent by a vehicle, and send a starting signal to the image acquisition module based on the short message set; and receive the processed images transmitted by the image processing module and send the processed images to the vehicle, such that the vehicle is parked based on the processed images. The image acquisition module is configured to acquire images of the vehicle based on the starting signal when the vehicle enters a garage and transmit the images to the image processing module. The image processing module is configured to correct and compress the images and transmit the corrected and compressed images to the communication module.

## Description

### CROSS-REFERENCE TO RELATED APPLICATIONS

This application is based upon and claims priority to Chinese Patent Application NO.201510717196.0, titled "parking auxiliary system and parking method", filed on October 29, 2015, the entire contents of which are incorporated herein by reference.

### TECHNICAL FIELD

The disclosure relates to the technical field of vehicle, and in particular to a parking auxiliary system and a parking method.

### BACKGROUD

Presently, a vehicle visual auxiliary system mainly uses a rear camera, i.e., installing the rear camera on the vehicle. In a case that a driver reverses, the rear camera provides a clear rear image for the driver, thereby eliminating a blind spot.

Now more and more vehicles are provided with a 360 degrees panorama parking system. Specifically, four fish-eye cameras are installed respectively at front, back, left and right of the vehicle, and images acquired by the cameras are gathered and pieced together to achieve panorama, thereby providing visual parking assistance for the driver.

The above visual parking system is based on the vehicle itself, hence the vehicle itself needs to be provided with the whole system. In addition, due to limitation of installing positions of the cameras, a visual field generated by visual stitching is limited, and the technology requirement and a cost are high.

### SUMMARY

In view of aforesaid problems, the disclosure is put forward to provide a parking auxiliary system and a parking method, such that a driver can park a vehicle based on images transmitted by the parking auxiliary system.

According to one aspect of the disclosure, a parking auxiliary system is provided, which includes a communication module, an image acquisition module and an image processing module, where
the communication module is configured to receive a short message set sent by a vehicle and send a starting signal to the image acquisition module based on the short message set; receive processed images transmitted by the image processing module and send the processed images to the vehicle, such that the vehicle is parked based on the processed images;
the image acquisition module is configured to acquire images of the vehicle entering a garage based on the starting signal and transmit the images to the image processing module; and
the image processing module is configured to correct and compress the images and transmit the corrected and compressed images to the communication module.

Optionally, the communication module may be a V2X wireless communication module.

Optionally, the short message set may carry identity information of the vehicle, and the system may further include:
an identifying module configured to: receive the short message set carrying the identity information of the vehicle sent by the communication module; match the vehicle identity information with preset vehicle identity information to determine whether the vehicle is a vehicle to be allowed to enter the garage; and send a starting signal to the image acquisition module via the communication module in a case that the vehicle is determined to be the vehicle to be allowed to enter the garage.

Optionally, the communication module may be further configured to send a shutdown signal to the image acquisition module in a case that the short message set sent by the vehicle is not received within a preset time period.

Optionally, the short message set may be a dedicated short range communication short message set and may include a longitude, a latitude and a driving direction of the vehicle.

According to another aspect of the disclosure, a parking method is provided, which includes:
receiving a short message set sent by a vehicle and sending a starting signal based on the short message set;
acquiring images of the vehicle entering a garage, based on the starting signal; and
correcting and compressing the images, and sending the corrected and compressed images to the vehicle, such that the vehicle is parked based on the corrected and compressed images.

Optionally, the short message set may carry identity information of the vehicle, and the method may further include:
matching the vehicle identity information with preset vehicle identity information to determine whether the vehicle is a vehicle to be allowed to enter the garage; and sending a starting signal in a case that the vehicle is determined to be the vehicle to be allowed to enter the garage.

Optionally, the method may further include:
sending a shutdown signal in a case that the short message set sent by the vehicle is not received within a preset time period; and
stopping image acquisition based on the shutdown signal.

Optionally, the receiving a short message set sent by a vehicle may include:
receiving a short message set sent by the vehicle using a V2X communication mode.

Optionally, the short message set may be a dedicated short range communication short message set and may include a longitude, a latitude and a driving direction of the vehicle.

According to the schemes of the disclosure, the communication module receives the short message set sent by the vehicle, and sends the starting signal to the image acquisition module based on the short message set; the image acquisition module acquires the images of the vehicle entering a garage based on the starting signal, and transmits the images to the image processing module; the image processing module corrects and compresses the images and transmits the corrected and compressed images to the communication module; the communication module receives the processed images transmitted by the image processing module and sends the processed images to the vehicle, such that the vehicle is parked based on the processed images. The images are transmitted in a real time manner, and the driver parks the vehicle based on the transmitted images without image stitching, therefore the cost is low and it is easy to be implemented.

Above description is only a summary of the technical scheme of the disclosure. In order to know the technical means of the disclosure more clearly so that it can be put into effect according to the content of the description, and to make aforesaid and other purpose, features and advantages of the disclosure clearer, embodiments of the disclosure are listed below.

### BRIEF DESCRIPTION OF THE DRAWINGS

By reading the detailed description of the preferably selected embodiments below, various other advantages and benefits become clear for a person of ordinary skill in the art. The drawings are only used for showing the purpose of the preferred embodiments and are not intended to limit the invention. And in the whole drawings, same drawing reference signs are used for representing same components. In the drawings:
Fig. 1 shows a structural block diagram of a parking auxiliary system according to an embodiment of the disclosure;
Fig. 2 shows a structural block diagram of a parking auxiliary system according to another embodiment of the disclosure;
Fig. 3 shows a flowchart of a parking method according to an embodiment of the disclosure;
Fig. 4 shows a flowchart of a parking method according to another embodiment of the disclosure;
Fig. 5 schematically shows a block diagram of a computing device for performing the parking method according to embodiments of the disclosure; and
Fig. 6 schematically shows a storage unit for storing or carrying program codes to perform the parking method according to embodiments of the disclosure.

### DETAILED DESCRIPTION

Exemplary embodiments of the disclosure are described in further detail with reference to the drawings below. Although the drawings show the exemplary embodiments of the disclosure, it should be understood that the disclosure may be implemented in various ways and is not limited by the embodiments described here. In contrast, these embodiments are provided to make the disclosure be understood more thoroughly, and completely deliver a range of the disclosure to those skilled in the art.

The parking auxiliary system according to the disclosure may be applied to a garage. When a vehicle enters the garage, a driver parks the vehicle based on guidance of the parking auxiliary system.

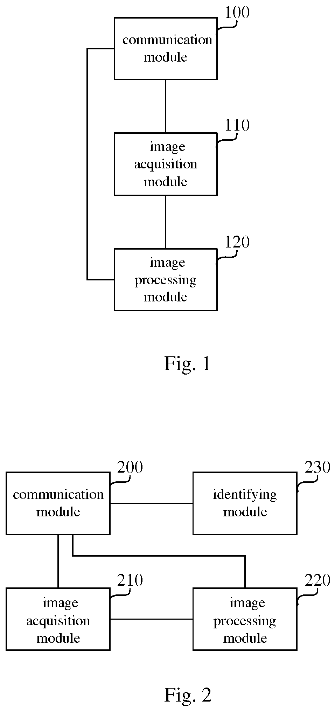

Fig. 1 shows a structural block diagram of a parking auxiliary system according to an embodiment of the disclosure. As show in Fig. 1, the system includes a communication module 100, an image acquisition module 110 and an image processing module 120.

The communication module 100 is configured to receive a short message set sent by a vehicle and send a starting signal to the image acquisition module based on the short message set.

Specifically, when the vehicle enters a garage, the short message set is sent to the communication module 100 of the parking auxiliary system. After receiving the short message set, the communication module 100 determines that a vehicle is to enter the garage, and sends a starting signal to the image acquisition module 110. The starting signal is used to drive the image acquisition module 110 to start working, i.e., acquiring an image.

The image acquisition module 110 is configured to acquire images of the vehicle entering a garage based on the starting signal and transmit the images to the image processing module.

Specifically, after receiving the starting signal sent by the communication module 100, the image acquisition module 110 starts to acquire all images of the vehicle passing through a door of the garage to enter the garage, and transmits the acquired images to the image processing module 120.

The image processing module 120 is configured to correct and compress the images and transmit the corrected and compressed images to the communication module.

The images acquired by the image acquisition module may distort due to the following reasons: aberration, distortion and a limited bandwidth of the image acquisition module; shooting postures and scan nonlinearity of the image acquisition module; and motion blur, radiation distortion and introduced noise and so on.

Specifically, after receiving the images transmitted by the image acquisition module, the image processing module 120 corrects the images. Specifically, the distorted images are recovered to obtain real images.

After the images are corrected, the corrected images are compressed to reduce image data and decrease image bytes, and the compressed images are transmitted to the communication module 100.

The communication module 100 is further configured to receive the processed images transmitted by the image processing module and send the processed images to the vehicle, such that the vehicle is parked based on the processed images.

Specifically, after receiving the compressed images, the communication module 100 sends the compressed images to the vehicle. After receiving the images, the vehicle decompresses and displays the images to provide intuitive parking auxiliary images for a driver.

According to the system provided by the above embodiment, the communication module receives the short message set sent by the vehicle and sends the starting signal to the image acquisition module based on the short message set; the image acquisition module acquires the images of the vehicle entering a garage based on the starting signal and transmits the images to the image processing module; the image processing module corrects and compresses the images and transmits the corrected and compressed images to the communication module; the communication module receives the processed images transmitted by the image processing module and sends the processed images to the vehicle, such that the vehicle is parked based on the processed images. The images are transmitted in a real time manner, and the driver parks the vehicle based on the transmitted images without image stitching, therefore the cost is low and it is easy to be implemented.

Fig. 2 shows a structural block diagram of a parking auxiliary system according to another embodiment of the disclosure. As shown in Fig. 2, the system includes a communication module 200, an image acquisition module 210, an image processing module 220 and an identifying module 230.

The communication module 200 is configured to receive a short message set sent by a vehicle and send a starting signal to the image acquisition module based on the short message set.

The communication module 200 is a V2X wireless communication module. V2X (Vehicle-to-X) indicates communication between the vehicle and devices around the vehicle, where X includes a vehicle, a unit located on the roadside and a service station and so on. Presently the wireless communication technology for the V2X complies with the protocol IEEE802.11P, a designed transmission distance is 300 to 1000m, a transmission rate is 3M to 27Mbps, and the wireless communication technology for the V2X may be applied to the fields of intelligent transportation and driving active safety. V2X wireless communication has the following advantages: high transmission real time, no need for base station, no need for network traffic from an operator and no fees issue.

The short message set is a dedicated short range communication short message set (DSRC short message set) and includes a longitude, a latitude and a driving direction of the vehicle. A position of the vehicle may be computed accurately based on the longitude and the latitude of the vehicle. The driving direction indicates whether the vehicle enters the garage or departs from the garage. After receiving the short message sent by the vehicle, the communication module may determine the position of the vehicle based on the longitude and the latitude of the vehicle, thereby determining whether to acquire an image.

Specifically, when the vehicle enters a garage, a V2X wireless communication module of the vehicle itself may send a short message set to the communication module 200 of the parking auxiliary system. After receiving the short message set, the communication module 200 determines that a vehicle is to enter the garage, thereby sending a starting signal to the image acquisition module 210. The starting signal is used to drive the image acquisition module to start working, i.e., acquiring an image.

The image acquisition module 210 is configured to acquire images of the vehicle entering a garage based on the starting signal and transmit the images to the image processing module.

Specifically, after receiving the starting signal sent by the communication module, the image acquisition module 210 starts to acquire all images of the vehicle passing through a door of the garage to enter the garage, and transmits the acquired images to the image processing module.

The image acquisition module is a fish-eye image acquisition module, for example a fish-eye camera. The image acquisition module may be installed at the top of the garage and independently monitor in a large range without a dead corner, thereby meeting a parking requirement of the driver.

The image processing module 220 is configured to correct and compress the images and transmit the corrected and compressed images to the communication module.

The images acquired by the image acquisition module may distort due to the following reasons: aberration, distortion and a limited bandwidth of the image acquisition module; shooting postures and scan nonlinearity of the image acquisition module; and motion blur, radiation distortion and introduced noise and so on.

Specifically, after receiving the images transmitted by the image acquisition module, the image processing module 220 corrects the images. Specifically, the distorted images are recovered to obtain real images.

In a case that the images are acquired by the fish-eye camera, the image processing module mainly performs eye-fish correction on the images.

After the images are corrected, the corrected images are compressed to reduce image data and decrease image bytes, and the compressed images are transmitted to the communication module.

The communication module 200 is further configured to receive the processed images transmitted by the image processing module and send the processed images to the vehicle, such that the vehicle is parked based on the processed images.

Specifically, after receiving the compressed images, the communication module sends the images to the vehicle. After receiving the images, the vehicle decompresses and displays the images to provide intuitive parking auxiliary images for the driver.

In the embodiment, the short message set carries identity information of the vehicle.

The system further includes an identifying module 230. The identifying module 230 is configured to receive the short message set carrying the vehicle identity information sent by the communication module; match the vehicle identity information with preset vehicle identity information to determine whether the vehicle is a vehicle to be allowed to enter the garage; and send a starting signal to the image acquisition module via the communication module in a case that the vehicle is determined to be the vehicle to be allowed to enter the garage.

The vehicle identity information may be a license plate number or an identifier of the vehicle. The license plate number or the identifier of each vehicle is unique.

Specifically, after receiving the short message set carrying the vehicle identity information sent by the vehicle, the communication module sends the short message set to the identifying module 230. After receiving the short message set carrying the vehicle identity information, the identifying module matches the vehicle identity information with preset vehicle identity information to determine whether the vehicle is a vehicle to be allowed to enter the garage; and sends a starting signal to the image acquisition module via the communication module in a case that the vehicle is determined to be the vehicle to be allowed to enter the garage, thereby avoiding receiving a short message set sent by a vehicle in another garage by mistake to start the image acquisition module to acquire an image and thus wasting resource.

In order to save resource and avoid unnecessary waste, the communication module 200 is further configured to send a shutdown signal to the image acquisition module in a case that the short message set sent by the vehicle is not received within a preset time period.

The image acquisition module is further configured to stop image acquisition based on the shutdown signal sent by the communication module.

Specifically, when the vehicle departs from the garage or enters the garage and flames out, the vehicle does not send a short message set to the communication module any more. If the short message set sent by the vehicle is not received by the communication module within a preset time period for example three minutes, the communication module sends a shutdown signal to the image acquisition module. After receiving the shutdown signal, the image acquisition module stops image acquisition.

According to the system provided by the above embodiment, the communication module receives the short message set sent by the vehicle, and sends the starting signal to the image acquisition module based on the short message set; the image acquisition module acquires the images of the vehicle entering a garage based on the starting signal and transmits the images to the image processing module; the image processing module corrects and compresses the images and transmits the corrected and compressed images to the communication module; the communication module receives the processed images transmitted by the image processing module, and sends the processed images to the vehicle, such that the vehicle is parked based on the processed images. Therefore, the images are transmitted in a real time manner, and the driver parks the vehicle based on the transmitted images without image stitching, thus the cost is low and it is easy to be implemented. In addition, the identifying module receives the short message set carrying the vehicle identity information sent by the communication module, matches the vehicle identity information with the preset vehicle identity information to determine whether the vehicle is a vehicle to be allowed to enter the garage, and sends the starting signal to the image acquisition module via the communication module in a case that the vehicle is determined to be the vehicle to be allowed to enter the garage, thereby avoiding receiving a short message set sent by a vehicle belonging to another garage by mistake to start the image acquisition module to acquire an image and thus wasting resource.

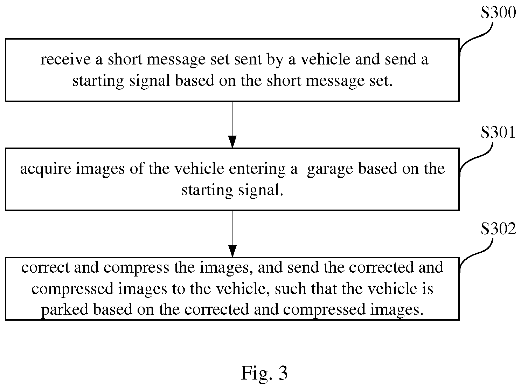

Fig. 3 shows a flowchart of a parking method according to an embodiment of the disclosure. As shown in Fig. 3, the method includes step S300 to step S302 in the following.

In step S300, a short message set sent by a vehicle is received and a starting signal is sent based on the short message set.

Specifically, when the vehicle enters a garage, the short message set is sent to a communication module of a parking auxiliary system. After receiving the short message set, the communication module determines that a vehicle is to enter the garage, and sends a starting signal to an image acquisition module. The starting signal is used to drive the image acquisition module to start working, i.e., acquiring an image.

In step S301, images of the vehicle entering a garage are acquired based on the starting signal when the vehicle enters the garage.

Specifically, after receiving the starting signal sent by the communication module, the image acquisition module starts to acquire all images of the vehicle passing through a door of the garage to enter the garage, and transmits the acquired images to an image processing module.

In step S302, the images are corrected and compressed, and the corrected and compressed images are sent to the vehicle, such that the vehicle is parked based on the corrected and compressed images.

The images acquired by the image acquisition module may distort due to the following reasons: aberration, distortion and a limited bandwidth of the image acquisition module; shooting postures and scan nonlinearity of the image acquisition module; and motion blur, radiation distortion and introduced noise and so on.

Specifically, after receiving the images transmitted by the image acquisition module, the image processing module corrects the images. Specifically, the distorted images are recovered to obtain real images.

After the images are corrected, the corrected images are compressed to reduce image data and decrease image bytes, and the compressed images are transmitted to the communication module.

After receiving the compressed images, the communication module sends the images to the vehicle. After receiving the images, the vehicle decompresses and displays the images to provide intuitive parking auxiliary images for a driver.

According to the method provided by the above embodiment, the short message set sent by the vehicle is received; the starting signal is sent based on the short message set; the images of the vehicle entering a garage are acquired based on the starting signal; the images are corrected and compressed and the corrected and compressed images are sent to the vehicle, such that the vehicle is parked based on the corrected and compressed images. The images are transmitted in a real time manner, and the driver parks the vehicle based on the transmitted images without image stitching, therefore the cost is low and it is easy to be implemented.

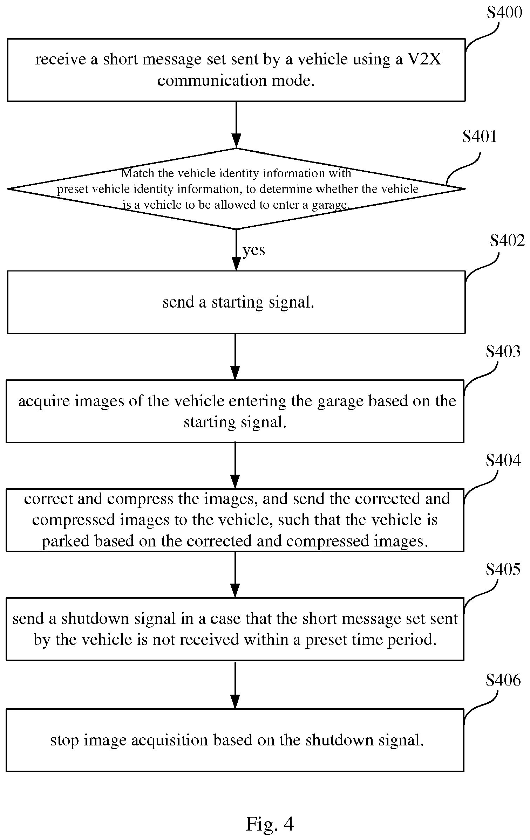

Fig. 4 shows a flowchart of a parking method according to another embodiment of the disclosure. As shown in Fig. 4, the method includes step S400 to step S406 in the following.

In step S400, a short message set sent by a vehicle is received using a V2X communication mode.

V2X (Vehicle-to-X) indicates communication between the vehicle and devices around the vehicle, where X includes a vehicle, a unit located on the roadside and a service station and so on. Presently the wireless communication technology for the V2X complies with the protocol IEEE802.11P, a designed transmission distance is 300 to 1000m, a transmission rate is 3M to 27Mbps, and the wireless communication technology for the V2X may be applied to the fields of intelligent transportation and driving active safety. V2X wireless communication has the following advantages: high transmission real time, no need for base station, no need for network traffic from an operator and no fees issue.

The short message set is a dedicated short range communication short message set (DSRC short message set) and includes a longitude, a latitude and a driving direction of the vehicle. A position of the vehicle may be computed accurately based on the longitude and the latitude of the vehicle. The driving direction indicates whether the vehicle enters the garage or departs from the garage. After receiving the short message sent by the vehicle, the communication module may determine the position of the vehicle based on the longitude and the latitude of the vehicle, thereby determining whether to acquire an image.

The short message set carries identity information of the vehicle.

Specifically, when the vehicle enters the garage, a V2X wireless communication module of the vehicle itself may send a short message set to a communication module of a parking auxiliary system. After receiving the short message set, the communication module sends the short message set carrying the vehicle identity information to an identifying module.

In step S401, the vehicle identity information is matched with preset vehicle identity information to determine whether the vehicle is a vehicle to be allowed to enter the garage; and step S402 is performed in a case that the vehicle is determined to be the vehicle to be allowed to enter the garage; or the method ends in a case that the vehicle is determined to be not the vehicle to be allowed to enter the garage.

After receiving the short message set carrying the vehicle identity information, the identifying module matches the vehicle identity information with preset vehicle identity information to determine whether the vehicle is a vehicle to be allowed to enter the garage; and sends a starting signal to an image acquisition module via the communication module in a case that the vehicle is determined to be the vehicle to be allowed to enter the garage, thereby avoiding receiving a short message set sent by a vehicle in another garage by mistake to start the image acquisition module to acquire an image and thus wasting resource.

In step S402, a starting signal is sent.

In step S403, images of the vehicle entering a garage are acquired based on the starting signal when the vehicle enters the garage.

Specifically, after receiving the starting signal sent by the communication module, the image acquisition module starts to acquire all images of the vehicle passing through a door of the garage to enter the garage, and transmits the acquired images to the image processing module.

For example, the images may be acquired by a fish-eye camera. The fish-eye camera is installed at the top of the garage, and may independently monitor in a large range without a dead corner, thereby meeting a parking requirement of the driver.

In step S404, the images are corrected and compressed, and the corrected and compressed images are sent to the vehicle, such that the vehicle is parked based on the corrected and compressed images.

The images acquired by the image acquisition module may distort due to the following reasons: aberration, distortion and a limited bandwidth of the image acquisition module; shooting postures and scan nonlinearity of the image acquisition module; and motion blur, radiation distortion and introduced noise and so on.

Specifically, after receiving the images transmitted by the image acquisition module, the image processing module corrects the images. Specifically, the distorted images are recovered to obtain real images.

In a case that the images are acquired by a fish-eye camera, the image processing module mainly performs fish-eye correction on the images.

After the images are corrected, the corrected images are compressed to reduce image data and decrease image bytes, and the compressed images are transmitted to the communication module.

After receiving the compressed images, the communication module sends the images to the vehicle. After receiving the images, the vehicle decompresses and displays the images to provide intuitive parking auxiliary images for the driver.

In step S405, a shutdown signal is sent if the short message set sent by the vehicle is not received within a preset time period.

In step S406, image acquisition is stopped based on the shutdown signal.

Specifically, when the vehicle departs from the garage or enters the garage and flames out, the vehicle does not send a short message set to the communication module any more. If the short message set sent by the vehicle is not received by the communication module within a preset time period for example three minutes, the communication module sends a shutdown signal to the image acquisition module. After receiving the shutdown signal, the image acquisition module stops image acquisition.

According to the method provided by the above embodiment, the communication module receives the short message set sent by the vehicle, and sends the starting signal to the image acquisition module based on the short message set; the image acquisition module acquires the images of the vehicle entering a garage based on the starting signal and transmits the images to the image processing module; the image processing module corrects and compresses the images and transmits the corrected and compressed images to the communication module; the communication module receives the processed images transmitted by the image processing module, and sends the processed images to the vehicle, such that the vehicle is parked based on the processed images. Therefore, the images are transmitted in a real time manner, and the driver parks the vehicle based on the transmitted images without image stitching, thus the cost is low and it is easy to be implemented. In addition, the identifying module receives the short message set carrying the vehicle identity information sent by the communication module, matches the vehicle identity information with the preset vehicle identity information to determine whether the vehicle is a vehicle to be allowed to enter the garage, and sends the starting signal to the image acquisition module via the communication module in a case that the vehicle is determined to be the vehicle to be allowed to enter the garage, thereby avoiding receiving a short message set sent by a vehicle belonging to another garage by mistake to start the image acquisition module to acquire an image and thus wasting resource.

The algorithm and display provided here have no inherent relation with any specific computer, virtual system or other devices. Various general-purpose systems can be used together with the teaching based on this. According to the description above, the structure required to construct this kind of system is obvious. Besides, the disclosure is not directed at any specific programming language. It should be understood that various programming language can be used for achieving the content of the disclosure described here, and above description of specific language is for disclosing the optimum embodiment of the disclosure.

The description provided here explains plenty of details. However, it can be understood that the embodiments of the disclosure can be implemented without these specific details. The known methods, structure and technology are not sown in detail in some embodiments, so as not to obscure the understanding of the description.

Similarly, it should be understood that in order to simplify the disclosure and help to understand one or more of the various aspects of the disclosure, the various features of the disclosure are sometimes grouped into a single embodiment, drawings, or description thereof in the above description of the exemplary embodiments of the disclosure. However, the method disclosed should not be explained as reflecting the following intention: that is, the disclosure sought for protection claims more features than the features clearly recorded in every claim. To be more precise, as is reflected in the following claims, the aspects of the disclosure are less than all the features of a single embodiment disclosed before. Therefore, the claims complying with a specific embodiment are explicitly incorporated into the specific embodiment thereby, wherein every claim itself as an independent embodiment of the disclosure.

Those skilled in the art can understand that adaptive changes can be made to the modules of the devices in the embodiment and the modules can be installed in one or more devices different from the embodiment. The modules or units or elements in the embodiment can be combined into one module or unit or element, and furthermore, they can be separated into more sub-modules or sub-units or sub-elements. Except such features and/or processes or that at least some in the unit are mutually exclusive, any combinations can be adopted to combine all the features disclosed by the description (including the attached claims, abstract and figures) and any method or all process of the device or unit disclosed as such. Unless there is otherwise explicit statement, every feature disclosed by the description (including the attached claims, abstract and figures) can be replaced by substitute feature providing the same, equivalent or similar purpose.

In addition, a personal skilled in the art can understand that although some embodiments described here comprise some features instead of other features included in other embodiments, the combination of features of different embodiments means falling into the scope of the disclosure and forming different embodiments. For example, in the following claims, any one of the embodiments sought for protection can be used in various combination modes.

The various components embodiments of the disclosure can be realized by hardware, or realized by software modules running on one or more processors, or realized by combination thereof. A person skilled in the art should understand that microprocessor or digital signal processor (DSP) can be used for realizing some or all functions of some or all components according to the embodiments in the disclosure in practice. The disclosure can also realize one part of or all devices or programs (for example, computer programs and computer program products) used for carrying out the method described here. Such programs for realizing the disclosure can be stored in computer readable medium, or can possess one or more forms of signal. Such signals can be downloaded from the Internet website or be provided at signal carriers, or be provided in any other forms.

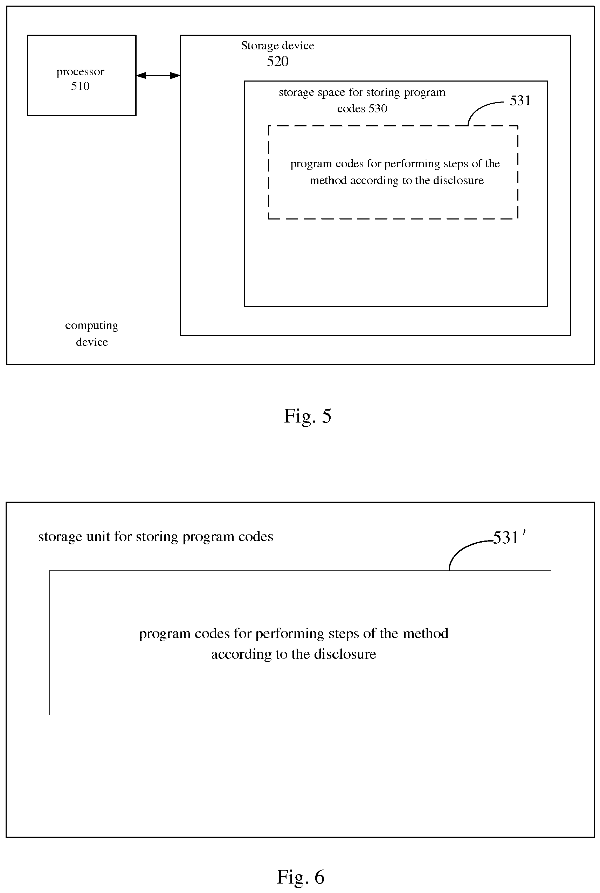

For example, Fig. 5 shows a computing device for achieving the parking method according to the disclosure. The computing device traditionally includes a processor 510 and a computer program product or a computer readable medium embodying as a storage 520. The storage 520 can be electronic storage such as flash memory, EEPROM (Electrically Erasable Programmable Read-Only Memory), EPROM, hard disk or ROM, and the like. The storage 520 possesses storage space 530 for carrying out procedure code 531 of any steps of aforesaid method. For example, storage space 530 for procedure code can comprise various procedure codes 531 used for realizing any steps of aforesaid method. These procedure codes can be read out from one or more computer program products or write in one or more computer program products. The computer program products comprise procedure code carriers such as hard disk, Compact Disc (CD), memory card or floppy disk and the like. These computer program products usually are portable or fixed storage cell as said in Fig. 6. The storage cell can possess memory paragraph, storage space like the storage 520 in the computing device in Fig. 5. The procedure code can be compressed in, for example, a proper form. Generally, storage cell comprises computer readable code 531' for performing method steps of the disclosure, i.e. the code can be read by processors such as 510 and the like. When the codes run on a computer device, the computer device will carry out various steps of the method described above.

It should be noticed that the embodiments are intended to illustrate the disclosure and not limit this disclosure, and a person skilled in the art can design substitute embodiments without departing from the scope of the appended claims. In the claims, any reference marks between brackets should not be constructed as limit for the claims. The word "comprise" does not exclude elements or steps that are not listed in the claims. The word "a" or "one" before the elements does not exclude that more such elements exist. The disclosure can be realized by means of hardware comprising several different elements and by means of properly programmed computer. In the unit claims several devices are listed, several of the devices can be embodied by a same hardware item. The use of words first, second and third does not mean any sequence. These words can be explained as name.

## Claims

1. A parking auxiliary system, comprising a communication module, an image acquisition module and an image processing module, wherein
the communication module is configured to receive a short message set sent by a vehicle and send a starting signal to the image acquisition module based on the short message set; receive processed images transmitted by the image processing module and send the processed images to the vehicle, such that the vehicle is parked based on the processed images;
the image acquisition module is configured to acquire images of the vehicle entering a garage based on the starting signal and transmit the images to the image processing module; and
the image processing module is configured to correct and compress the images and transmit the corrected and compressed images to the communication module.

2. The parking auxiliary system according to claim 1, wherein the communication module is a V2X wireless communication module.

3. The parking auxiliary system according to claim 1 or 2, wherein the short message set carries identity information of the vehicle, and the system further comprises:
an identifying module configured to: receive the short message set carrying the identity information of the vehicle sent by the communication module; match the vehicle identity information with preset vehicle identity information to determine whether the vehicle is a vehicle to be allowed to enter the garage; and send a starting signal to the image acquisition module via the communication module in a case that the vehicle is determined to be the vehicle to be allowed to enter the garage.

4. The parking auxiliary system according to claim 1 or 2, wherein the communication module is further configured to send a shutdown signal to the image acquisition module in a case that the short message set sent by the vehicle is not received within a preset time period, and
the image acquisition module is further configured to stop image acquisition based on the shutdown signal sent by the communication module.

5. The parking auxiliary system according to claim 1 or 2, wherein the short message set is a dedicated short range communication short message set and comprises a longitude, a latitude and a driving direction of the vehicle.

6. A parking method, comprising:
receiving a short message set sent by a vehicle and sending a starting signal based on the short message set;
acquiring images of the vehicle entering a garage, based on the starting signal; and
correcting and compressing the images, and sending the corrected and compressed images to the vehicle, such that the vehicle is parked based on the corrected and compressed images.

7. The parking method according to claim 6, wherein the short message set carries identity information of the vehicle, and the method further comprises:
matching the vehicle identity information with preset vehicle identity information to determine whether the vehicle is a vehicle to be allowed to enter the garage; and sending a starting signal in a case that the vehicle is determined to be the vehicle to be allowed to enter the garage.

8. The parking method according to claim 6 or 7, further comprising:
sending a shutdown signal in a case that the short message set sent by the vehicle is not received within a preset time period; and
stopping image acquisition based on the shutdown signal.

9. The parking method according to claim 6 or 7, wherein the receiving a short message set sent by a vehicle comprises:
receiving the short message set sent by the vehicle via a V2X communication mode.

10. The parking method according to claim 6 or 7, wherein the short message set is a dedicated short range communication short message set and comprises a longitude, a latitude and a driving direction of the vehicle.
